# EUROPÄISCHE PATENTANMELDUNG

(11) **EP 2 258 573 A2**
(43) Veröffentlichungstag der Anmeldung: **08.12.2010**
(21) Anmeldenummer: 10005610.0
(22) Anmeldetag: 28.05.2010
(51) Int. Cl.: B60K 7/00

(54) **Elektroantrieb**

(30) Priorität: 29.05.2009 DE 102009023221
(71) Anmelder: Schmidt, Karl Josef, 59757 Arnsberg-Herdringen (DE)
(72) Erfinder: Schmidt, Karl Josef, 59757 Arnsberg-Herdringen (DE)
(74) Vertreter: Thiel, Christian

(57) **Zusammenfassung**

Die Erfindung betrifft einen Elektroantrieb für ein Rad eines Kraftfahrzeugs, mit einem stationär am Kraftfahrzeug angeordneten Stator. (1) und einem drehfest mit dem Rad verbundenen Rotors (1), die jeweils einen Kraftübertragungsabschnitt (3, 4) aufweisen, wobei die Kraftübertragungsabschnitte (3, 4) über magnetische Kräfte zusammenwirken und in einem Abstand (A) zueinander angeordnet sind. Um einen Elektroantrieb für ein Rad eines Kraftfahrzeugs bereitzustellen, welcher einen Kontakt zwischen den Kraftübertragungsabschnitten (3, 4) von Stator (1) und Rotor (2) sowie Schwankungen des Abstandes (A) der Kraftübertragungsabschnitte (3, 4) zueinander während des Betriebs des Elektronantriebs beziehungsweise des Kraftfahrzeugs unterbindet, wird mit der Erfindung vorgeschlagen, dass der Elektroantrieb eine Einrichtung zum automatischen Regeln des Abstandes (A) ausweist.

## Beschreibung

Die Erfindung betrifft einen Elektroantrieb für ein Rad eines Kraftfahrzeugs, mit einem stationär am Kraftfahrzeug angeordneten Stator und einem drehfest mit dem Rad verbundenen Rotor, die jeweils einen Kraftübertragungsabschnitt aufweisen, wobei die Kraftübertragungsabschnitte über magnetische Kräfte zusammenwirken und In einem Abstand zueinander angeordnet sind.

Ein entsprechender Elektroantrieb ist beispielsweise aus DE 693 06 344 T2 bekannt. Er' weist einen Stator und einen Rotor auf, wobei an dem Kraftübertragungsabschnitt des Stators Magnetspulen und an dem Kraftübertragungsabschnitt des Rotors Permanentmagnete angeordnet sind. Durch eine gezielte Ansteuerung der Magnetspulen wirken diese mit den Permanentmagneten über magnetische Kräfte derart zusammen dass das Rad in Drehung versetzt werden kann. Die Permanentmagnete sind an der Innenseite des Radkranzes des Rades angeordnet. Der Kraftübertragungsabschnitt des Stators ist in einem geringen Abstand zu den Permanentmagneten und somit zu dem Kraftübertragungsabschnitt des Rotors angeordnet. Die Wahl eines derart geringen Abstandes zwischen den Kraftübertragungsabschnitten von Stator und Rotor ist erforderlich, um einen Elektroantrieb mit hohem Wirkungsgrad zu erhalten.

Der möglichst klein zu wählende Abstand zwischen den Kraftübertragungsabschnitten von Stator und Rotor kann jedoch dazu führen, dass es beim Fahren des Kraftfahrzeugs zu einem schleifenden Kontakt zwischen den Kraftübertragungsabschnitten aufgrund von Verformungen des Radkranzes oder der Radscheibe des Rades kommen kann. Hierdurch können die Kraftübertragungsabschnitte beschädigt werden. Auf der anderen Seite kann es durch den während des Fahrens des Kraftfahrzeugs variierenden Abstand zwischen den Kraftübertragungsabschnitten zu Schwankungen des Wirkungsgrades des Elektroantriebs und somit zu einer unglelchmäßigen Kraftumsetzung kommen, was den Wirkungsgrad des Antriebs wie den Fahrkomfort deutlich beeinträchtigt.

Hiervon ausgehend ist es die Aufgabe der Erfindung, einen Elektroantrieb für ein Rad eines Kraftfahrzeugs bereitzustellen, welcher einen Kontakt zwischen den Kraftübertragungsabschnitten von Stator und Rotor sowie Schwankungen des Abstandes der Kraftübertragungsabschnitte zueinander während des Betriebs des Elektronantriebs beziehungsweise des Kraftfahrzeugs unterbindet.

Diese Aufgabe wird durch einen Elektroantrieb der eingangs genannten Art dadurch gelöst, dass er eine Einrichtung zum automatischen Regeln des Abstandes aufweist.

Erfindungsgemäß wird somit dafür gesorgt, dass über die automatische Regelung der Abstand zwischen den Kräftübertragungsabschnitten von Stator und Rotor nahezu konstant gehalten wird, um dem Elektroantrieb einen gleich bleibenden Wirkungsgrad zu verleihen, was sich positiv auf den mit einem solchen Elektroantrieb erzielbaren Fahrkomfort auswirkt. Des Weiteren wird mit der Erfindung verhindert, dass es während der Fahrt des Kraftfahrzeugs beziehungsweise des Betriebs des Elektroantrieb zu einem schädigenden Kontakt zwischen den Kraftübertragungsabschnitten kommt. Dieses verbessert die Langlebigkeit und Robustheit des Elektroantriebs erheblich.

Gemäß einer vorteilhaften Ausgestaltung der Erfindung weist die Einrichtung eine Steuereinheit auf, welche mit wenigstens einem Abstandssensor und mit zumindest einer Bewegungseinheit verbunden ist, wobei einer der beiden Kraftübertragungsabschnitte mittels der Bewegungseinheit relativ zu dem anderen Kraftübertragungsabschnitt bewegbar ist. Die Steuereinheit empfängt über den wenigstens einen Abstandssensor Abstandssignale bezüglich des momentanen Abstands zwischen den Kraftübertragungsabschnitten. Auf Basis dieser Abstandssignale generiert die Steuereinheit Steuersignale zur Steuerung der Bewegungseinheit. Die Bewegungseinheit ist mit einem der beiden Kraftübertragungsabschnitte verbunden, so dass dieser Kraiftübertragungsabschnitt relativ zu dem anderen Kraftübertragungsabschnitt bewegbar ist. Diese Relatlvbewegungen weisen zumindest eine Bewegungskomponente in Richtung der kürzesten Verbindung zwischen den Kraftübertragungsabschnitten auf. Falls es erforderlich ist, könnten jedoch auch Bewegungskomponenten quer zu dieser Richtung vorhanden sein. Die Bewegungseinheit kann beispielsweise motorbetrieben sein. Welcher der beiden Kraftübertragungsabschnitte von der Bewegungseinheit bewegt werden sollen, hängt von den jeweiligen technischen Anforderungen und Gegebenheiten ab. Vorzugsweise weist die Einrichtung zum automatischen Regeln des Abstandes mehrere Abstandssensoren auf, wodurch eine sehr exakte Aussage über den momentanen Abstand der Kraftübertragungsabschnitte treffen lässt. Des Weiteren ist es möglich, dass beide Kraftübertragungsabschnitte jeweils mit einer Bewegungseinheit verbunden und über diese bewegbar sind. Auch in diesem Fall werden die Bewegungseinheiten über Steuersignale der Steuereinheit gesteuert, welche auf Basis der von dem beziehungsweise den Abstandssensoren gelieferten Abstandssignalen generlert werden.

Eine weitere vorteilhafte Ausgestaltung der Erfindung sieht vor, dass wenigstens einer der beiden Kraftübertragungsabschnitte federbelastet ist. Diese Ausgestaltung kann alternativ zu der vorhergehenden verwendet werden. Zumindest einer der beiden Kraftübertragungsabschnitte ist hierbei in Richtung des anderen Kraftübertragungsabschnittes vorgespannt. Kommt es in Folge des Betriebs des Elektroantriebs und somit des Fahrens des Kraftfahrzeugs zu einem Kontakt zwischen den Kraftübertragungsabschnitten, welcher beispielsweise durch Verformungen des Radkranzes oder der Radscheibe verursacht wird, weicht der federbelastete Kraftübertragungsabschnitt zurück, so dass zwischen den Kraftübertragungsabschnitten keine großen schädigende Reibungskräfte erzeugt werden. Auch bei dieser Ausgestaltung der Erfindung wird somit gewährleistet, dass ein in etwa gleich bleibender geringer Abstand zwischen den Kraftübertragungsabschnitten eingehalten wird, was mit den oben geschilderten Vorteilen verbunden ist. Es ist ebenfalls möglich, dass beide Kraftübertragungsabschnitte federbelastet sind, um, wie beschrieben, ausweichen zu können. Des Weiteren kann der beziehungsweise können die Kraftübertragungsabschnitte mit einer vorbeschriebenen Bewegungseinheit verbunden und gleichzeitig federbelastet sein. Dieses hat den Vorteil; dass zum einen eine sehr exakte automatische Regelung des Abstandes über Abstandssensoren, Steuereinheit und Bewegungseinheit erfolgen kann und es zudem möglich ist, dass beispielsweise kurzzeitige starke Verformungen von Radkranz oder Radscheibe nicht zu einem schädigenden Kontakt zwischen den Kraftübertragungsabschnitten führen, Indem wenigstens ein Kraftübertragungsabschnitt bei einem Auftreten eines Kontaktes zwischen den Kraftübertragungsabschnitten über seine Federbelastung zurückweicht.

Nach einer weiteren vorteilhaften Ausgestaltung der Erfindung weist einer der beiden Kraftübertragungsabschnitte Magnetspulen und der andere Kraftübertragungsabschnitt Permanentmagnete und/oder Magnetspulen auf. Das Zusammenwirken von Magnetspulen und Permanentmagneten beziehungsweise Magnetspulen untereinander wird durch eine geeignete Ansteuerung der Magnetspulen erreicht. Dieses kann mittels einer Steuereinrichtung und einer damit gesteuerten Energieversorgung erfolgen, wobei die Steuereinrichtung vom Fahrer des Kraftfahrzeugs über die üblicherweise vorhandenen Einrichtungen oder zusätzliche Einrichtungen am. Kraftfahrzeug Fahrsignale erhält, die In Steuersignale zur geeigneten Energieversorgung der Magnetspulen umgesetzt werden. Zur geeigneten Ansteuerung der Magnetspulen kann beispielsweise auch der momentane Drehwinkel zwischen stator und Rotor berücksichtigt werden.

Es wird weiter vorgeschlagen, dass die einander zugewandten Flächen der Kraftübertragungsabschnitte im Querschnitt parallel oder quer zur Drehachse des Rades ausgerichtet sind. Welche dieser Ausgestaltungen gewählt wird, hängt von der jeweilig gewünschten Ausgestaltung des Elektroantrieb beziehungsweise der gewünschten Anordnung seiner Kraftübertragungsabschnitte an den übrigen Komponenten des Rades ab:

Zweckmäßigerweise ist der Kraftübertragungsabschnitt des Rotors an dem Radkranz des Rades angeordnet. Alternativ hierzu kann der Kraftübertragungsabschnitt des Rotors an der Radscheibe des Rades angeordnet sein.

Diese Ausgestattungen unterscheiden sich insbesondere bezüglich der jeweilig zur Drehung des Rades aufzubringenden Kraft. Entsprechend den jeweilig vorliegenden baulichen Möglichkeiten und technischen Anforderungen kann die eine oder andere dieser Ausgestaltungen ausgewählt werden.

Mit der Erfindung wird weiter die Verwendung des Elektroantrieb nach einer der vorbeschriebenen Ausgestaltungen als zuschaltbarer Zusatzantrieb an einem Kraftfahrzeug vorgeschlagen. Das Kraftfahrzeug kann beispielsweise mit einem konventionellen Hauptmotor, wie beispielsweise einem Otto- oder DieselMotor, ausgestattet sein. Der Elektroantrieb kann bei Bedarf zugeschaltet werden. Jedoch ist es ebenso möglich, dass der konventionelle Antrieb bel Vorliegen gewisser Fahrbedingungen abgeschaltet und der zusätzliche Elektronantrieb zum alleinigen Antreiben des Rades beziehungsweise des Kraftfahrzeugs eingeschaltet wird. Hierzu ist es natürlich erforderlich, wenigstens die Räder einer Achse des Kraftfahrzeugs jeweils mit einem solchen Elektroantrieb auszustatten.

Ferner wird mit der Erfindung die Verwendung des Elektroantriebs nach einer der vorbeschriebenen Ausgestaltungen zur Rückgewinnung von Energie während des Fahrens des Kraftfahrzeugs vorgeschlagen. Dieses kann während einer Verringerung der Drehgeschwindigkeit des Kraftfahrzeugrades oder auch bei abgeschaltetem Elektroantrieb und Fahren des Kraftfahrzeugs mit dem konventionellen Antrieb erfolgen.

Mit der Erfindung wird somit ein sehr robust ausgebildeter Elektroantrieb über die Räder eines Kraftfahrzeugs bereitgestellt, welcher einen hohen Fahrkomfort gewährleistet. Im Rahmen der Erfindung sind dabei unterschiedlichste Kombinationen der vorbeschriebenen Merkmale möglich. Zudem ist dem Fachmann auf dem betreffenden Gebiet klar, wie technische Einzelheiten, wie beispielsweise die Bestromung eines Magnetspulen tragenden Rotors, auf geeignete Art und Weise erfolgen kann. Er kann hierzu auf sein allgemeines Wissen über Elektromotoren zurückgreifen, weshalb in der Beschreibung hierauf nicht näher eingegangen werden muss.

Weitere Vorteile und Merkmale der vorliegenden Erfindung werden im Folgenden anhand der Figuren näher erläutert. Dabei zeigen
- Figur 1:: eine schematische Darstellung eines ersten Ausführungsbeispiels für den erfindungsgemäßen Elektroantrieb,
- Figur 2:: eine schematische Darstellung eines zweiten Ausführungsbeispiels für den erfindungsgemäßen Elektroantrieb, und
- Figur 3:: eine schematische Darstellung eines dritten Ausführungsbeispiels für den erfindungsgemäßen Elektroantrieb.

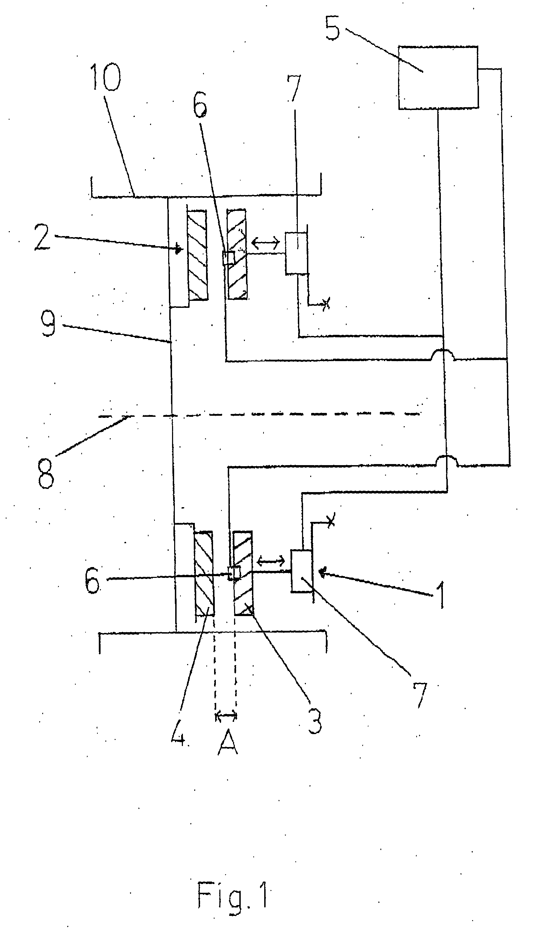

Figur 1 zeigt schematisch ein erstes Ausführungsbeispiel für den erfindungsgemäßen Elektroantrieb für ein Rad eines Kraftfahrzeugs In Schnittdarstellung. Der Elektroantrieb weist einen stationär am Kraftfahrzeug angeordneten Stator 1 und einen drehfest mit dem Rad verbundenen Rotor 2 auf. Der Stator 1 weist einen Kraftübertragungsabschnitt 3 auf, welcher über magnetische Kräfte mit dem Kraftübertragungsabschnitt 4 des Rotors 2 zusammenwirkt. Die Kraftübertragungsabschnitte 3 und 4 sind im Abstand A zueinander angeordnet und im Wesentlichen kreisförmig ausgebildet.

Der Elektroantrieb weist weiter die erfindungsgemäße Einrichtung zum automatischen Regeln des Abstandes A auf. Diese umfasst eine Steuereinheit 5, welche kommunikationstechnisch mit den Abstandssensoren 6 zum Empfang von Abstandsslgnalen verbunden ist. Die Steuereinheit 5 ist weiter kommunikationstechnisch mit den Bewegungseinheiten 7 verbunden. Diese Bewegungseinheiten 7 sind mechanisch mit dem Kraftübertragungsabschnitt 3 des Stators 1 verbunden, wodurch der Kraftübertragungsabschnitt 3 relativ zu dem Kraftübertragungsabschnitt 4 des Rotors 1 gemäß den Pfeilen bewegbar ist Die Steuereinheit 5 steuert auf Basis der von den Abstandssensoren 6 gelieferten Abstandssignale die Bewegungseinheiten 7 derart an, dass der Abstand A zwischen den Kraftübertragungsabschnitten 3 und 4 konstant gehalten wird.

Einer der beiden Kraftübertragungsabschnitte 3 und 4 weist Magnetspulen auf und der jeweils andere Kraftübertragungsabschnitt 4 beziehungsweise 3 weist Permanentmagnete und/oder Magnetspulen auf. Die zur geeigneten Ansteuerung erforderlichen Energieversorgungskomponenten sind nicht weiter dargestellt, jedoch dem Fachmann geläufig. Ist beispielsweise der Kraftübertragungsabschnitt 4 des Rotors 2 mit Magnetspulen ausgestattet, können diese über eine geeignete Anordnung von Schleifkontakten mit Energie versorgt werden. Die einander zugewandten Flächen der Kraftübertragungsabschnitte 3 und 4 sind im Querschnitt gemäß Figur 1 quer zur Drehachse 8 des Rades ausgebildet. Der Kraftübertragungsabschnitt 4 des Rotors 2 ist bei der gezeigten Ausführungsform an der Radscheibe 9 des Rades angeordnet

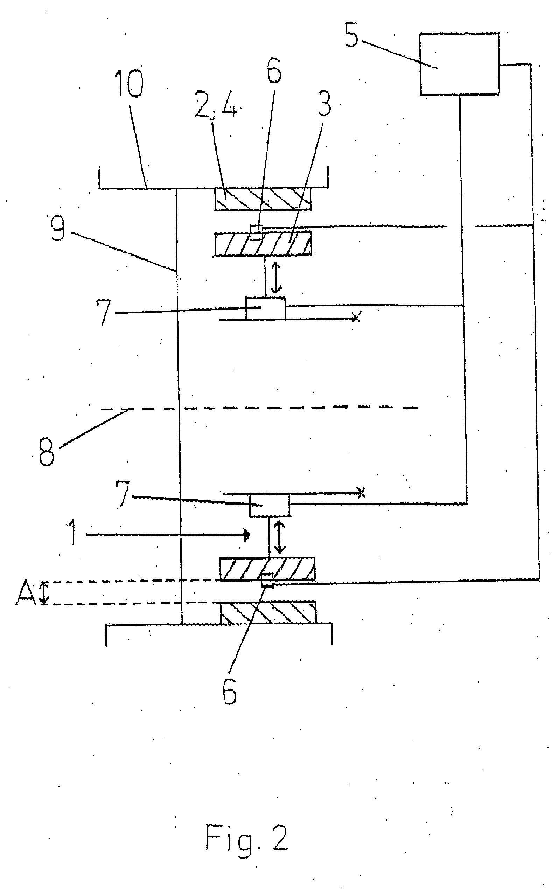

Figur 2 zeigt eine zur Figur 1 alternative Ausgestaltung des erfindungsgemäßen Elektroaritriebs. Diese Ausgestaltung unterscheidet sich von der der Figur 1 insbesondere dadurch, dass die einander zugewandten Flächen der Kraftübertragungsabschnitte 3 und 4 im Querschnitt parallel zur Drehachse 8 des Rades ausgerichtet sind. Zudem ist der Kraftübertragungsabschnitt 4 des Rotors 2 nicht wie in Figur 1 an der Radscheibe 9 des Rades, sondern an dessen Radkranz 10 angeordnet. Auch bel dieser Ausführungsform ist die erfindungsgemäße Wahrung eines konstanten Abstandes A zwischen den Kraftübertragungsabschnitten 3 und 4 gewährleistet.

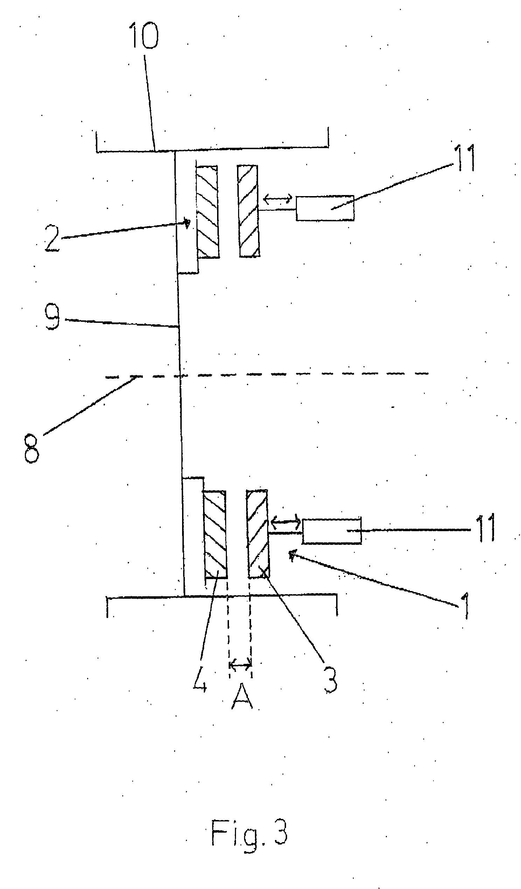

Figur 3 zeigt ein drittes Ausführungsbeispiel für den erfindungsgemäßen Elektroantrieb. Bei dieser Ausführungsform sind keine Abstandssensoren 6, Bewegungseinheiten 7 und keine Steuereinheit 5 vorhanden. Stattdessen ist der Kraftübertragungsabschnitt 4 des Stators 1 mittels der Federeinrichtungen 11 federbelastet. Dieses stellt in dieser Ausführungsform der Erfindung die Einrichtung zum Regeln des Abstands A zwischen den Kraftübertragungsabschnitten 3 und 4 dar. Der Kraftübertragungsabschnitt 3 des Stators 1 ist somit ebenfalls gemäß den Pfeilen relativ zu dem Kraftübertragungsabschnitt 4 des Rotors 2 bewegbar. Mittels der Federeinrichtungen 11 ist der Kraftübertragungsabschnitt 4 in Richtung des Kraftübertragungsabschnitts 3 vorgespannt, so dass es bei einem Kontakt zwischen den Kraftübertragungsabschnitten 3 und 4 zu einem Ausweichen des Kraftübertragungsabschnltts 4 nach rechts kommen kann. Hierdurch wird ein schädigender Kontakt zwischen den Kraftübertragungsabschnitten 3 und 4 vermieden. Da zudem der ideale Abstand A zwischen den Kraftübertragungsabschnitten 3 und 4 möglichst gering ist, wird auch durch diese Ausgestaltung der Erfindung ein relativ konstanter Abstand A zwischen den Kraftübertragungsabschnitten 3 und 4 aufrechterhalten.

Die anhand der Figuren beschriebenen Ausführüngsbeispiele dienen der Erläuterung und sind nicht beschränkend.

## Patentansprüche

1. Elektroantrieb für ein Rad eines Kraftfahrzeugs, mit einem stationär am Kraftfahrzeug angeordneten Stator (1) und einem drehfest mit dem Rad verbundenen Rotor (2), die jeweils einen Kraftübertragungsabschnitt (3, 4) aufweisen, wobei die Kraftübertragungsabschnitte (3, 4) über magnetische Kräfte zusammenwirken und in einem Abstand (A) zueinander angeordnet sind, **gekennzeichnet durch** eine Einrichtung zum automatischen Regeln des Abstandes (A), mit der der Abstand zwischen den Kraftübertragungsabschnitten von Stator (1) und Rotor (2) im Wesentlichen konstant gehalten wird.

2. Elektroantrieb nach Anspruch 1, **dadurch gekennzeichnet, dass** die Einrichtung eine Steuereinheit (5) aufweist, weiche mit wenigstens einem Abstandssensor (6) und mit zumindest einer Bewegungseinheit (7) verbunden ist, wobei einer der beiden Kraftübertragungsabschnitte (3, 4) mittels der Bewagungseinheit (7) relativ zu dem anderen Kraftübertragungsabschnitt (3, 4) bewegbar ist.

3. Elektroantrieb nach Anspruch 1 oder 2, **dadurch gekennzeichnet, das** wenigstens einer der beiden Kraftübertragungsabschnitte (3, 4) federbelastet ist.

4. Elektroantrieb nach einem der vorhergehenden Ansprüche, **dadurch gekennzeichnet, dass** einer der beiden Kraftübertragungsabschnitte (3, 4) Magnetspulen und der andere Kraftübertragungsabschnitt (3, 4) Permanentmagnete und/oder Magnetspulen aufweist.

5. Elektroantrieb nach einem der vorhergehenden Ansprüche, **dadurch gekennzeichnet, dass** die einander zugewandten Flächen der Kraftübertragungsabschnitte (3, 4) im Querschnitt parallel oder quer zur Drehachse (8) des Rades ausgerichtet stand.

6. Elektroantrieb nach einem der vorhergehenden Ansprüche, **dadurch gekennzeichnet, dass** der Kraftübertragungsabschnitt (4) des Rotors (2) an dem Radkranz (10) des Rades angeordnet ist.

7. Elektroantrieb nach einem der Ansprüche 1 bis 5, **dadurch gekennzeichnet, dass** der Kraftübertragungsabschnitt (4) des Rotors (2) an der Radscheibe (9) des Rades angeordnet ist.

8. Verwendung des Elektroantriebs nach einem der vorhergehenden Ansprüche als zuschaltbaren Zusatzantrieb an einem Kraftfahrzeug.

9. Verwendung des Elektroantriebs nach einem der vorhergehenden Ansprüche zur Rückgewinnung von Energie während des Fahrens des Kraftfahrzeugs.
